Europäisches Patentamt

European Patent Office

Office européen des brevets

(11) Publication number: **0 007 096**
A1

(12) **EUROPEAN PATENT APPLICATION**

(21) Application number: 79102389.8

(22) Date of filing: 11.07.79

(51) Int. Cl.³: **H 02 G 15/06**
**H 02 G 15/22**

(30) Priority: 12.07.78 IT 2558478
12.07.78 IT 2230078

(43) Date of publication of application:
23.01.80 Bulletin 80/2

(84) Designated Contracting States:
AT BE FR GB SE

(71) Applicant: Industrie Pirelli S.p.A.
Piazza Duca d'Aosta 3
I-20100 Milan(IT)

(72) Inventor: Fazio, Erminio
Via Don Sturzo, 15
Bresso (Milan)(IT)

(74) Representative: Kohler, Maria, Dr. et al,
Dr.E.Wiegang; Dipl.-Ing. W. Niemann Dr. M. Kohler;
Dipl.-Ing. C. Gernhardt Dipl.-Ing. J. Glaeser
Herzog-Wilhelm-Strasse 16
D-8000 München 2(DE)

(54) Outlet for sealing ends for cables.

(57) An improved outlet for sealing ends, particularly suitable for low and medium voltages, comprising at least an insulator (14) surrounding the conductor (11) and a lug (16) aligned with the end of the conductor and contacting said conductor, said insulator and said lug being fastened to each other by means of at least one inner elongated element (20), provided at one end with means (22) for engaging with the insulator, and at the other end, with means (24, 25, 26) able to engage with the lug.

EP 0 007 096 A1

./...

Croydon Printing Company Ltd.

Fig 1

## Outlet for Sealing Ends for Cables

The present invention refers to an improvement for sealing ends, particularly suitable to be applied on electric cables having conductors provided with an extruded insultation or with an insulation of paper impregnated with an impregnating compound, especially, but not exclusively, for low and medium voltages.

As known, a sealing end outlet for cables having a conductor provided with an extruded insulation, comprises essentially an insulator, surrounding at least the insulated end portion of the conductor, a lug aligned and in contact with the free bare end of said conductor and means for fastening the lug to the insulator.

According to the technique in use, the fastening means are, generally, realized by equal and opposed flanges, one being connected to the insulator and the other to the lug.

Said flanges are tightened the one against the other by means of screws passing through corresponding holes placed along the outer circumference of the flanges themselves.

This type of sealing end outlet has, however, several drawbacks.

In fact the flanges must have dimensions suitable for each insulator, that is for each cable type.

It follows the need to have great supplies of flanges according to all the necessities which can occur.

Furthermore, the enviroment factors tend to exert a cor-

rosive action on the metallic parts under tension.

It is therefore necessary that the flanges and the screws be made of an anticorrosive material (for example aluminium bronze).

This involves a non-indifferent economical charge, taking into account that the flanges have a rather great diameter and thickness, able to provide the sealing end outlet with a sufficient stability and a mechanical resistance.

Moreover, the tightening of the screws is never able to guarantee an absolutely uniformly distributed pressure between the contacting surfaces of the flanges.

·Consequently, there is the risk of infiltration of water or of other pollution fluids, as well as the formation of preferential etching points for the corrosions.

Sometimes, the asymmetrical distribution of the tightening forces can be responsible for the breaking of the insulator during the assembling phase.

In the case in which the cable has a conductor insulated with paper impregnated with an impregnating compound, its sealing end outlet can differ from that aforesaid, because between the two flanges of which the lug and the insulator are provided, an expansion tank can be arranged.

This latter is a bag able to absorb the volume variations that the impregnating compound undergoes because of the cable thermal transients.

Said expansion tank consists generally of a cylindrical container whose bases have two circular holes which allow the tank to be positioned around the free end of the conductor.

The tank is integral with the lug and the insulator by means of adjustable tie rods, arranged outside of said tank and passing through corresponding holes provided in the edge of the insulator and lug flanges.

Of course, the sealing end outlet for cables having a condutor insulated with an impregnating compound, has all the drawbacks above cited for the conductors covered with an extruded insulation.

Moreover, the tie rods which are provided outside the expansion tank, having the same voltage as the voltage applied to the lug, present the risk of producing the formation of disruptive electrical discharges, both with respect to the metallic parts of the adjacent outlets in a sealing end for multi-core cables, and with respect to metallic parts of adjacent installations.

Therefore, precautions must be taken.

In the case of a sealing end for multi-core electric cables, a great spreading of the single phases is provided, in order to sufficiently space,to one another, the single sealing end outlets.

When there are adjacent installations, the sealing end outlet must be placed at a safety space from the latter.

However, it is necessary to bear in mind that the expansion tank is also a member for controlling the impregnating compound lever; therefore, it is realized so as to permit the view of its inside, either with small windows, or with a transparent material.

The tie rods, arranged outside the tank, constitute an opaque zone which makes the view of the inside difficult and, moreover. said tie rods obstract the cleaning of the small windows or of the transparent parts.

-4-

It is understandable how these last drawbacks, due to the tie rods, are particularly troublesome in the zones in which the sealing end is subjected to foulings and dust deposits.

The invention aims to provide for a sealing end outlet suitable to be applied both on electric cables having conductors provided with an extruded insulation, and on electric cables having conductors insulated with paper impregnated with an impregnating compound.

Particularly the invention teaches a sealing end outlet whose fastening means are inside the sealing end and therefore are protected against the corrosive action of the environment factors.

Said fastening means can therefore be constituted by materials (for instance light alloy) poorer than those used in the present state of the technique. One example of a light alloy is a silicium-aluminium-alloy.

The arrangement of the fastening means inside the sealing end reduces the presence of outer metallic parts under tension and reduces the risk of disruptive discharges with respect to the metallic parts of adjacent installations or to other adjacent sealing ends of the same equipment for a multi-core cable.

Moreover, the invention realizes fastening means which permit a uniform distribution of the tightening pressures between the contacting parts, reducing to a minimum, in this way, the risk of breaking of the insulator during the assembling phase and assuring at the same time a perfect seal.

The seal is particularly important to prevent either inwards migration of pollution or corrosive substances, or escape of impregnating compound, in the case of sealing ends for cables having conductors insulated with paper impregnated with an impregnating compound.

Moreover, the invention achieves also, the other conditions being the same, the advantage of reducing the insulator length, especially in the case of a sealing end outlet for cable conductors insulated with paper impregnated with an impregnating compound.

For this latter type of sealing end outlet, the invention aims, too, to guarantee the panoramic view, on an angle of $360^{\circ}$, of the expansion tank contents.

More precisely, an object of the present invention is an improved outlet for sealing ends, particularly suitable for a low and medium voltage electric cable, comprising at least: an insulator surrounding at least the insulated end portion of the conductor, being the head end of said insulator provided with an annular flange, integral with it, protruding inwards; a lug aligned with the conductor free end and contacting said conductor; said sealing end outlet being characterized by the fact that the lower part of said lug is provided with an integral and coaxial end cap, having a concavity turned to the insulator, said insulator and said lug being fastened to each other by means at least of an elongated element, provided at one end, with means for engagement with said annular flange of said insulator and, at the other end, with means able to engage with said end cap in said concavity.

The enclosed sheets of drawing, show, by way of non-limited examples, embodiments of the present invention; more precisely:

- figure 1 shows partially in section a sealing end outlet for at least a single-core electric cable, having the conductor insulated with impregnated paper;

- figure 2 shows partially in section a sealing end outlet for at least a single-core electric cable, having the conductor insulated with impregnated paper and provided with an expansion tank.

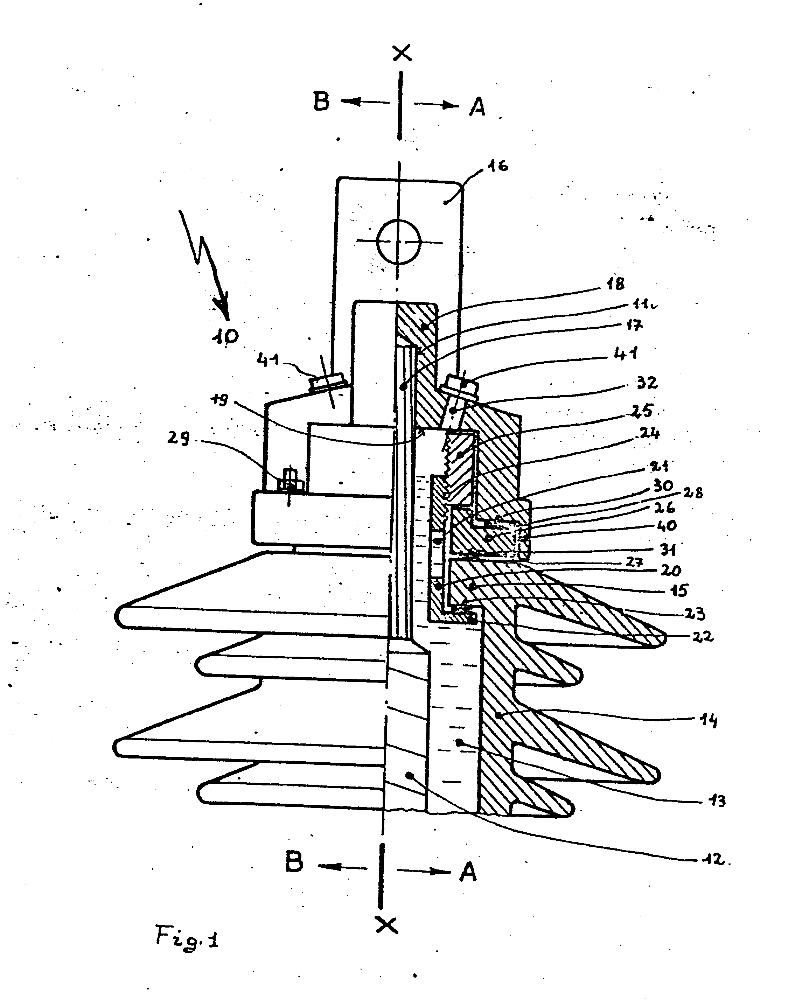

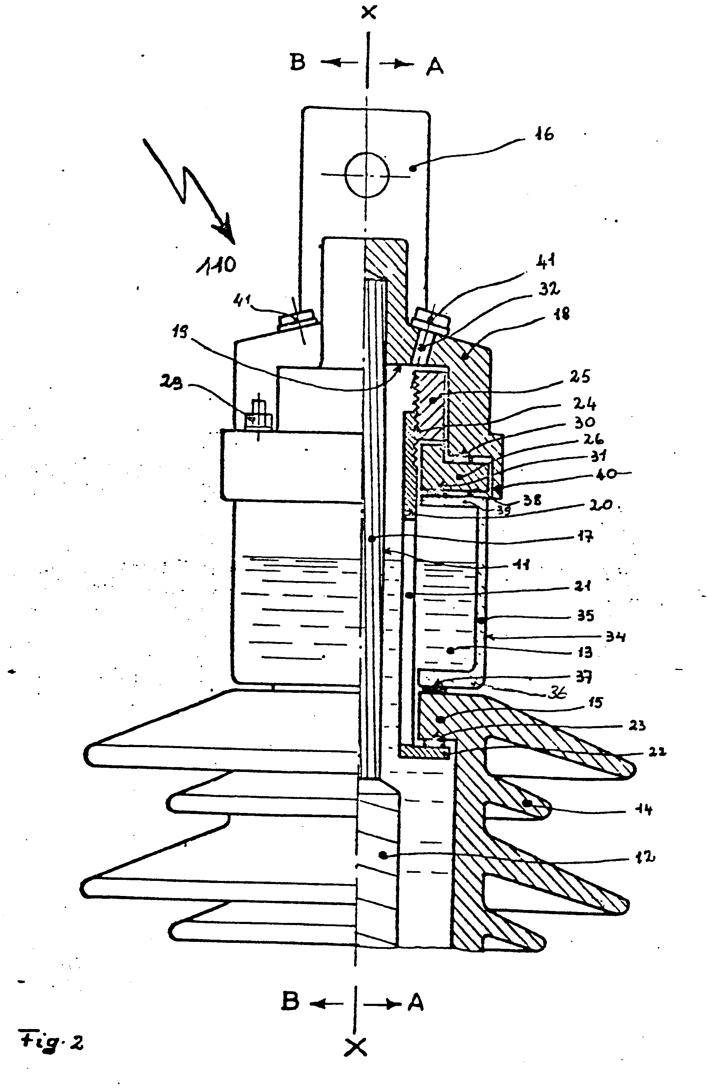

Both, in figure 1 and in figure 2, the part A-A on the right side of the axis X-X represents a longitudinal section of the sealing end outlet, whilst the part B-B represents an outer view.

The improved sealing end outlet 10, shown in figure 1, is applied to an electric cable having a conductor 11 insulated with paper 12 impregnated with an impregnating compound 13, but, of course, said outlet 10 can be applied also to a cable having an extruded insulation. In such a case the reference numeral 13 indicates a bituminous compound.

Said sealing end outlet 10 comprises an insulator 14 which surrounds at least the insulated end of said conductor 11.

The head end of the insulator 14 is provided with an annular flange 15 protruding inwards.

A lug 16 is aligned and coaxial and in contact with the free end 17 of said conductor 11. The lug 16 is made integral with said end 17 in an appropriate way, for example by means of setscrews not shown.

The lower part of the lug 16 is provided with an end cap 18 realized with anticorrosive material (for example aluminium bronze).

The end cap 18 is integral with and coaxial to the lug 16 and has a concavity or recess 19 turned to the insulator 14.

-7-

The insulator 14 and the lug 16 are fastened to each other at least by means of an elongated tubular element 20.

In the represented particular case, said elongated element 20 consists of a tubular body, coaxial to the conductor 11 and whose cylindrical wall is provided at least with one through hole 21.

This hole 21 has the purpose of permitting a flow and a reflux of the compound 13 through it, but can be also useful for allowing a uniform distribution of the bitumen in the case of conductors having an extruded insulation.

Said elongated element 20 is provided with means able to engage with the annular flange 15 of the insulator 14 and at the other end with means able to engage with said end cap 18 in said concavity or recess 19.

In the example shown in figure 1, the means able to engage with the annular flange 15 consist of an annular shoulder 22 protruding outwards.

A first O-ring seal 23 is placed between the annular shoulder 22 and the annular flange 15.

The means able to engage with the end cap 18 in the concavity 19 are instead represented by a thread 24 engaging with a nut 25.

The means able to engage with the end cap 18, in the shown embodiment, comprise also an annular bearing 26 surrounding the tubular body of element 20 clamped between the annular surface of nut 25, faced to the insulator 14, and the lying below an annular surface 27, coinciding in figure 1, with the outer surface of the annular flange 15.

The annular bearing 26 is clamped also by an annular surface 28 of the end cap 18 faced to the insulator 14. The annular bearing 26 can be made out of a light alloy, for example a silicium-aluminium-alloy.

The annular bearing 26 is fastened in an appropriate way to the end cap 18 for example by means of screws 29 housed in corresponding seats, not shown in the figure 1, and present in the end cap 18 and in the bearing 26.

A second O-ring seal 30 is inserted between the annular surface of the bearing 26 faced to the lug 16 and the annular surface 28 of the end cap 18.

A third O-ring seal 31 is placed between the bearing 26 and the lying below surface. The end cap 18 comprises at its lower end (according to figure 1) a protruding annular edge 40 which in the assembled condition extends over the outer annular surface of the annular bearing 26.

The end cap 18, as it can be seen from the drawing, is such as to completely cover the nut 25 and the annular bearing 26, and is also provided with at least one through duct 32, provided with a hermetic plug 41.

The elongated element 20 of figure 1, as well as the engaged means placed at the two ends, respectively, annular shoulder 22 and nut 25, are insulated from the outer environment, being enclosed in the assembly formed by the insulator 14 and the end cap 18. Said elongated element 20, shoulder 22 and nut 25 are preferably made of a poorer material than that forming the end cap 18, for example they can be of a light alloy.

Herebelow, the assembling of the improved sealing end outlet 10 on the cable, according to the present invention, is described.

The tubular element 20 without the nut 25 is arranged inside the insulator 14, until the annular shoulder 22 abuts, by means of the first O-ring seal 23, against the lower or inner face of the annular flange 15.

Around the tubular element 20, more particularly around the length emerging from the insulator 14, the third O-ring seal 31 is at first arranged and then the annular bearing 26.

Then the nut 25 is screwed on the threaded end 24 of the tubular element 20 so as to clamp the bearing 26 between the nut 25 itself and the outer surface of the annular flange 15.

The assembly formed by the insulator 14, the tubular element 20, the annular bearing 26, is inserted around the end of the insulated conductor 11, opportunely arranged by removing a certain length of the insulation 12.

The insulator 14 base (not shown), is thereafter secured with appropriate means to a fixed support already arranged on the corresponding cable (said means, said support and said cable are not shown).

The second O-ring seal 30 is arranged around the tubular element 20 provided with the nut 25 and on the bearing 26.

Thereafter the free end 17 of the conductor 11 is inserted in the corresponding housing of the assembly formed by the lug 16 and the end cap 18, in such a way that the nut 25 and the annular bearing 26 with the O-ring seal 30, are encased in the corresponding seat of the end cap 18, i.e. in the concavity 19.

The annular band 28 of the end cap 18 surface faced to the insulator 14 will lay on the surface of the annular bearing 26 faced to the lug 16.

At this point, appropriate setscrews, not shown, make the free end 17 of the conductor 11 integral with the lug 16, guaranteeing thus a good contact.

Also the screws 29 are secured in the respective seats (not shown) to make the bearing 26 integral with the end cap 18 and to complete the fastening of the sealing end outlet 10 according to the invention.

At his point, through the ducts 32, a bituminous compound is introduced to fill the cavity of the sealing end, in the case of cables having an extruded insulation conductor, or an impregnating compound which remains viscous at room temperature, in the case of cables having the conductor insulated with impregnated paper.

When the compound 13 in the inside of the sealing end has reached the desired level, the hermetic plugs 41 are inserted in the ducts 32.

The sealing end outlet 110 represented in figure 2 for a cable having a conductor insulated with paper impregnated with impregnating compound, comprises the same elements of the sealing end outlet represented in figure 1, so that the equal parts are represented with the same reference numerals in the two figures.

The only difference consists in the fact that between the end cap 18 and the insulator 14, an expansion tank 34 is provided around and coaxially to said elongated tubular element 20.

The tank 34 is made of an insulated material and it can be of an opaque material and provided with a small window of transparent material.

Preferably, however, said tank 34 is of a completely transparent material (for example glass), so as to permit a panoramic view of $360^{\circ}$ of the level of the compound 13 contained therein.

Said tank 34 has a cylindrical lateral wall 35. The lower base 36 rests on the outer surface of said annular flange 15, having interposed a fourth seal 37.

The outer surface 38 of the lid 39 of the tank 34 constitutes the lying below surface for supporting the annular bearing 26.

The third seal 31 is provided between the annular bearing 26 and the outer surface 38 of the lid 39.

The assembling of the sealing end outlet 110 provided with the expansion tank 34 of figure 2, takes place in the same way as the previously described assembling of the sealing end outlet of figure 1.

Practically, it is sufficient to arrange the expansion tank 34 around the tubular element 20 before arranging the annular bearing 26 and the nut 25.

Of course, the elongated tubular element 20 which will be used in the case represented in figure 2 will have such a length to completely pass through the expansion tank 34 and to emerge from this latter for a length which will permit    it to receive at its free end the annular bearing 26 and the nut 25.

From the above said and exemplified, it is clear that the advantages of the sealing end outlet according to the present invention derive essentially from the particular shape and arrangement of the means for fastening the lug 16 to the insulator 14.

Firstly, only the end cap 18 must be necessarily made of anticorrosive material (for example aluminium bronze); the other metallic parts forming the sealing end outlet according to the invention, being protected by the end cap 18 and by the insulator 14 against the corrosive action of the environment factors, can therefore be made of poorer materials (for example of light alloy).

On the other hand, since certain parts of said end cap 18 and, particularly the edge 40, have only a covering function, it is possible to reduce considerably their thickness, with a consequent great saving on the total weight of the anticorrosive special material.

Secondly, the nut 25 assures a rapid and efficient assembling of the sealing end outlet.

In fact, the uniform distribution of the pressure along the supporting surface of the different components parts reduces to a minimum the risk of breaking of the insulator 14 during the assembling phase and assures a perfect seal, as required in the case of the cable insulated with impregnated paper.

The sealing end outlet according to the present invention, provided with the expansion tank 34, especially for a cable insulated with impregnated paper, is not subjected to the drawbacks of the technique in use.

As a matter of fact, the arrangement of the fastening means inside the expansion tank 34, and therefore the lack of outer metallic parts under tension, reduce the risk of disruptive discharges in respect of the metallic parts of adjacent installations or of the sealing end itself.

Moreover, the lack of fastening means outside the expansion tank 34 permits to take thoroughly advantage of the panoramic view of the tank 34 inside, the tank 34 being made of transparent material; this constitutes a
further safety factor, because it permits to promptly intervene if the compound level or its condition are not in
accordance with the standards.

But, the greatest advantage which can be achieved by using
the sealing end outlet provided with the expansion tank 34 acc-
ing to the present invention, consists in reducing the
length of the insulator 14, the other conditions being
the same.

As known to the technicians, the length of the insulator
14 is proportional to the voltage applied to the lug 16,
in order to have a sufficient safety space between the
metallic parts at the insulator base (not shown) and the
lug 16 itself.

In the case of the sealing end outlet according to the
present invention, the insulator length can be reduced,
the other conditions being the same, of a length corresponding to the expansion tank height; in fact, said
expansion tank being made of non-conductive material and
having no metallic parts at its base and around the walls,
becomes integral with the insulator itself.

The outer surface of the cylindrical wall 35 of said expansion tank 34 can be even provided with one or more
fins (not shown) of non-conductive and transparent
material, consequently further increasing of the safety
margins.

At the most, said expansion tank 34 and said fins can
constitute a monolitic element, accomplishing, at the
same time, the functions of insulator and tank.

At last, an important particular, the O-ring seals 23,
30, 31 and 37, being elastic, they assure also an elastic
connection among the elements in contact and a uniform

-14-

distribution of the pressures on all the fastening surfaces, besides guaranteeing a seal between the inner environment of the sealing end and the outer one.

Of course, the improved outlet for sealing ends according
to the present invention can be applied both, to a sealing
end for single-core cables, and to a sealing end for multi-
core cables, each core being provided with its own
sealing end.

Generally, for multi-core cables having conductors insulated with paper impregnated with impregnating compound,
preferably the sealing end outlet 10 with the expansion
tank 34 of figure 2 is applied to terminate a single
phase while that of figure 1 is applied to terminate the
remaining ones.

The constructive particulars of the invention could, of
course, vary according to the needs, but all will be included
in the scope of the present invention.

Patent Claims:

1. Improved outlet for sealing ends, particularly suitable for low and medium voltages, comprising at least: an insulator (14) surrounding at least the insulated end portion of the conductor (11), being the head end of said insulator provided with an annular flange (15), integral with it, protruding inwards; a lug (16) aligned with the conductor free end and contacting said conductor; said sealing end outlet being characterized by the fact that the lower part of said lug (16) is provided integrally and coaxially with an end cap (18), having a concavity (19) faced to the insulator (14), said insulator and said lug being fastened to each other by means of at least an elongated element (20), provided at one end with means for engaging with said annular flange (15) of said insulator, and, at the other end with means able to engage with said end cap in said concavity.

2. Improved outlet for sealing ends according to claim 1, characterized by the fact that said elongated element (20) is a tubular body surrounding coaxially said conductor (11) and having a cylindrical wall provided with at least one through hole (21).

3. Improved sealing end outlet according to claim 1 or 2, characterized by the fact that said means, able to engage with said annular fange (15), consist of an annular shoulder (22) protruding outwards and abutting against the inner surface of said annular flange, a first seal (23) being placed between said shoulder and said annular flange.

4. Improved sealing end outlet according to any of the preceding claims, characterized by the fact

that said means able to engage with said end cap (18) in said concavity (19) consist of at least a thread (24) provided on said other end, said thread engaging with a nut (25) arranged in said concavity.

5. Improved sealing end outlet according to claim 4, characterized by the fact
that said means able to engage with said end cap (18) comprise also an annular bearing (26) surrounding said tubular body (20) and clamped at least between the annular surface of said nut (25) faced to the insulator (14) and a lying below annular surface.

6. Improved sealing end outlet according to claim 5, characterized by the fact
that said lying below annular surface is the outer surface of said annular flange (15).

7. Improved sealing end outlet according to claim 5, characterized by the fact
that said annular bearing (26) is also clamped by an annular surface (28) of the said end cap (18) faced to the insulator (14).

8. Improved sealing end outlet according to any one of the preceding claims, charaterized by the fact
that said concavity (19) of said end cap (18) has such dimensions to entirely contain at least said nut (25) and said annular bearing (26).

9. Improved sealing end outlet according to claim 7 or 8, characterized by the fact
that a second O-ring seal (30) is inserted between the annular bearing surface faced to the lug (16) and and the annular surface (28) of said end cap (18).

10. Improved sealing end outlet according to claim 6, characterized by the fact

-3-

that a third O-ring seal (31) is inserted between said annular bearing (26) and said lying below annular surface.

11. Improved sealing end outlet according to any one of the preceding claims, characterized by the fact that said end cap (18) is made of anticorrosive material.

12. Improved sealing end outlet according to claim 11, characterized by the fact that said anticorrosive material is aluminium bronze.

13. Improved sealing end outlet according to claim 12, characterized by the fact that said end cap (18) is provided with at least a through duct (32) hermetically sealed.

14. Improved sealing end outlet according to any one of the claims from 1 to 5 and from 7 to 13, characterized by the fact that an expansion tank (34) of insulated material is inserted, coaxially to said elongated element (20), between said end cap (18) and said insulator (14).

15. Improved sealing end outlet according to claim 14, characterized by the fact that said tank (34) comprises an upper base or lid (39) constituting the lying below annular surface for supporting said annular bearing (26).

16. Improved sealing end outlet according to claim 14 or 15, characterized by the fact that said tank (34) is provided with at least one view window.

17. Improved sealing end outlet according to claims 14 and 15, characterized by the fact

-4-

that said tank (34) is of a transparent material.

18. Improved sealing end outlet according to claim 17, characterized by the fact
that the outer surface of said tank is provided with at least one fin of transparent material.

19. Improved sealing end outlet according to claim 18, characterized by the fact
that said at least one fin constitutes a monolitic element with said tank.

Fig. 1

Fig. 2

# EUROPEAN SEARCH REPORT

**European Patent Office**

Application number

EP 79 10 2389

## DOCUMENTS CONSIDERED TO BE RELEVANT

| Category | Citation of document with indication, where appropriate, of relevant passages | Relevant to claim |
|---|---|---|
| | DE - C - 877 331 (FELTEN & GUILLEAUME) <br> * Page 2 * <br><br> -- | 1,3-7, 9,10 |
| | FR - A - 893 447 (FELTEN & GUILLEAUME) <br> * Page 1 * <br><br> -- | 1,3-7, 9,10 |
| | FR - A - 1 559 330 (FELTEN & GUILLEAUME) <br> * Pages 1 and 2; page 3, left-hand column, paragraph 1 * <br><br> -- | 1,3-7, 9,10 |
| | DE - A - 2 642 361 (FELTEN & GUILLEAUME) <br> * Page 8, paragraph 3; figure 3 * <br><br> -- | 1 |
| | US - A - 2 057 069 (LINE MATERIAL) <br> * Page 1, left-hand column, lines 31-55; right-hand column; page 2, left-hand column, lines 1-61 * <br><br> -- | 1 |
| | US - A - 1 943 247 (G. & W. ELECTRIC) <br> * Page 1, lines 36-105 * <br><br> -- | 1,17 |
| | US - A - 3 322 883 (G. & W. ELECTRIC) | 1 |

**CLASSIFICATION OF THE APPLICATION (Int. Cl. 3)**

H 02 G 15/06
15/22

**TECHNICAL FIELDS SEARCHED (Int.Cl. 3)**

H 02 G 15/06
15/02
15/00
15/22
15/20
15/26

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-10-1979 | LOMMEL |

EPO Form 1503.1  06.78

0007096

European Patent
Office

**EUROPEAN SEARCH REPORT**

EP 79 10 2389
-2-

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| | * Column 2, lines 25-41; column 3, lines 38-52 *<br><br>-- | | |
| A | US - A - 1 983 336 (OHIO BRASS COMP.)<br><br>* Page 1, lines 31-110 *<br><br>-- | 1,17 | |
| A | US - A - 1 786 728 (OHIO BRASS COMP.)<br><br>* Page 1, lines 70-100; page 2, lines 1-83 *<br><br>---- | 1 | **TECHNICAL FIELDS SEARCHED (Int. Cl. ³)** |